# EUROPEAN PATENT APPLICATION

(11) **EP 4 692 867 A1**
(43) Date of publication of application: **11.02.2026**
(21) Application number: 24779845.7
(22) Date of filing: 21.03.2024
(51) Int. Cl.: G02B 5/23, B32B 27/30, B32B 27/40, C08G 18/67, C08G 18/80, C09D 4/02, C09D 5/00, C09D 133/14, C09D 175/14, G02C 7/10

(54) **PHOTOCHROMIC ARTICLE, SPECTACLES, AND METHOD FOR PRODUCING PHOTOCHROMIC ARTICLE**

(30) Priority: 30.03.2023 JP 2023055698
(71) Applicant: Hoya Lens Thailand Ltd., Pathumthani 12130 (TH)
(72) Inventor: HIGUCHI, Takeshi, Tokyo 160-8347 (JP); KOBAYASHI, Kei, Tokyo 160-8347 (JP)
(74) Representative: Hoffmann Eitle
(86) International application number: PCT/JP2024/011028
(87) International publication number: WO 2024/203725

(57) **Abstract**

Provided is a photochromic article having a substrate, a primer layer formed from a primer layer forming polymer composition, and a photochromic layer containing a photochromic compound in this order. The primer layer forming polymer composition contains a polymer having a hydroxy group and a (meth) acryloyl group, and a blocked isocyanate.

## Description

### Technical Field

The present invention relates to a photochromic article, spectacles, and a method for producing a photochromic article.

### Background Art

A photochromic compound is a compound having a property of developing a color under irradiation with a light in a wavelength range having a photoresponsiveness, and fading without light irradiation (photochromic property). Below, an article including a photochromic compound will be referred to as a photochromic article. For example, PTL 1 discloses an optical article including a layer including a photochromic compound (photochromic layer) provided on a substrate.

### Citation List

### Patent Literature

PTL 1: Japanese Patent No. 4405833

### Summary of Invention

### Technical Problem

With the intention of improving the performance of a photochromic article, the present inventors repeated studies to enhance the adhesive property between a photochromic layer and a substrate.

Namely, in accordance with an aspect of the present invention, it is an object to provide a photochromic article excellent in the adhesive property between a photochromic layer and a substrate.

### Solution to Problem

As a result of intensive studies, the present inventors have newly found that a primer layer formed from a primer layer forming polymer composition including a polymer having a hydroxy group and a (meth) acryloyl group and a blocked isocyanate is provided between a photochromic layer and a substrate, which enables provision of a photochromic article excellent in the adhesive property between the photochromic layer and the substrate.

Incidentally, in order to improve the adhesive property between the photochromic layer and the substrate, PTL 1 (Japanese Patent No. 4405833) discloses provision of a polyurethane resin layer formed of a moisture-curable polyurethane resin between the substrate and the photochromic layer. However, moisture-curable polyurethane resins react with the moisture in the air to be cured, and hence tend to increase in the liquid viscosity due to the occurrence of the reaction with the moisture in the air during storage. In contrast, it was also found that the above-described primer layer forming polymer composition can exhibit excellent applicability after storage because it is possible to suppress an increase in viscosity during storage. This is presumed due to the following. The isocyanate contained in the primer layer forming polymer composition is a blocked isocyanate in which the isocyanate group is protected by a blocking agent, so that the reaction during storage of the hydroxy group and the isocyanate group possessed by the polymer can be suppressed. However, the present invention is not limited to the presumption described in the present description.

Other aspects of the present invention are as follows.
[1] A photochromic article including:
   a substrate;
   a primer layer formed from a primer layer forming polymer composition; and
   a photochromic layer containing a photochromic compound
   in this order,
   in which the primer layer forming polymer composition contains
   a polymer having a hydroxy group and a (meth)acryloyl group; and
   a blocked isocyanate;
[2] The photochromic article according to [1], in which the polymer is a (meth) acrylic polymer.
[3] The photochromic article according to [1], in which the photochromic layer is a cured layer obtained by curing a (meth)acrylate based polymerizable composition containing a photochromic compound.
[4] The photochromic article according to [2], in which the photochromic layer is a cured layer obtained by curing a (meth)acrylate based polymerizable composition containing a photochromic compound.
[5] The photochromic article according to any one of [1] to [4], which is a spectacle lens, a goggle lens, a visor part of a sun visor, or a shield component of a helmet.
[6] The photochromic article according to [5], which is a spectacle lens.
[7] Spectacles including the spectacle lens according to [6].
[8] A method for producing a photochromic article, the method including:
   applying a primer layer forming polymer composition onto a substrate, and
   forming a primer layer containing a photochromic compound onto the formed primer layer, in which
   the primer layer forming polymer composition contains
   a polymer having a hydroxy group and a (meth)acryloyl group; and
   a blocked isocyanate;
   the method further including heat-treating a laminate obtained by forming the photochromic layer.
[9] The method for producing the photochromic article according to [8], in which the polymer is a (meth) acrylic polymer.
[10] The method for producing the photochromic article according to [8], including forming the photochromic layer by curing a (meth) acrylate based polymerizable composition including a photochromic compound.
[11] The method for producing the photochromic article according to [9], including forming the photochromic layer by curing a (meth) acrylate based polymerizable composition including a photochromic compound.
[12] The method for producing the photochromic article according to any one of [8] to [11], in which the photochromic article is a spectacle lens, a goggle lens, the visor part of a sun visor, or a shield component of a helmet.

### Advantageous Effects of Invention

According to one aspect of the present invention, it is possible to provide a photochromic article having an excellent adhesive property between a photochromic layer and a substrate.

### Description of Embodiments

### [Photochromic Article]

Hereinafter, the photochromic article according to one aspect of the present invention will be described in more detail.

The photochromic article has a substrate, a primer layer, and a photochromic layer in this order. In one form, the primer layer can be a layer adjacent to the photochromic layer and can be a layer adjacent to the substrate or a layer provided on the substrate. Here, "being adjacent" means being in direct contact with each other with no other layers interposed therebetween.

### <Substrate>

The optical article can have a photochromic layer on a substrate selected according to the type of the article. As an example of the substrate, a spectacle lens substrate may be a plastic lens substrate or a glass lens substrate. The glass lens substrate may be, for example, a lens substrate made of inorganic glass. The lens substrate is preferably a plastic lens substrate from the viewpoint of being light-weight, hard to break, and easy to handle. As the plastic lens substrates, mention may be made of (meth)acrylic resins, styrene resins, polycarbonate resins, allyl resins, allyl carbonate resins such as diethylene glycol bisallyl carbonate resins (CR-39), vinyl resins, polyester resins, polyether resins, urethane resins resulting from the reaction between an isocyanate compound and a hydroxy compound such as diethylene glycol, thiourethane resins resulting from the reaction between an isocyanate compound and a polythiol compound, and a cured product (generally referred to as a transparent resin) obtained by curing a curable composition containing a (thio)epoxy compound having one or more disulfide bonds in the molecule. As the lens substrate, an undyed substrate (colorless lens) may be used or a dyed substrate (dyed lens) may be used. The refractive index of the lens substrate may be, for example, about 1.50 to 1.75. However, the refractive index of the lens substrate is not limited to the above range, and may be within the above range or may be separated above or below the above range. In the present invention and the present description, the refractive index represents a refractive index for a light having a wavelength of 500 nm. In addition, the lens substrate may be a lens having an index (so-called prescription lens) or a lens having no index (so-called non-prescription lens).

The spectacle lenses can be various lenses such as a single focus lens, a multifocal lens, and a progressive power lens. The type of the lens is determined by the surface shape of each opposite side of the lens substrate. In addition, the surface of the lens substrate may be any of a convex surface, a concave surface, or a flat surface. In normal lens substrates and spectacle lenses, the object-side surface is a convex surface, and the eyeball-side surface is a concave surface. However, the present invention is not limited thereto. Although the photochromic layer can be generally provided on the object-side surface of the lens substrate, it may be provided on the eyeball-side surface.

### <Primer Layer>

The primer layer is a primer layer formed from a primer layer forming polymer composition containing a polymer having a hydroxy group and a (meth) acryloyl group and a blocked isocyanate.

### (Polymer)

In the present invention and in the present description, the "(meth)acryloyl group" is used as the meaning encompassing an acryloyl group and a methacryloyl group, and the "(meth)acryloyloxy group" is used as the meaning encompassing an acryloyloxy group and a methacryloyloxy group. In the above polymer, the acryloyl group may be included in the form of an acryloyloxy group and the methacryloyl group may be included in the form of a methacryloyloxy group. This also applies to (meth)acrylate described below.

The "polymer" in the present invention and the present description may be a homopolymer or a copolymer.

The above polymers can contain hydroxy groups and (meth)acryloyl groups in the side chains of the polymers. The present inventors have presumed that the hydroxy group contained in the polymer contributes to the formation of a bond between the substrate and the primer layer with the isocyanate group regenerated by dissociating the blocking agent of the blocked isocyanate, and the (meth)acryloyl group contained in the polymer contributes to the formation of a bond between the photochromic layer and the primer layer. It can be considered that the bond formation can enhance the adhesive property between the photochromic layer and the substrate.

The main skeleton of the polymer has no particular restriction. In one form, the polymer can be a (meth)acrylic polymer. The "(meth)acrylic polymers" are intended to mean homopolymers or copolymers of (meth)acrylate in the present invention and the present description. Details of the "(meth)acrylate" will be described later.

As the polymers having hydroxy groups and (meth)acryloyl groups, polymers synthesized by a known method can be used, and commercially available products can also be used. Examples of the commercially available product may include reactive polymers (RP-274S) manufactured by KSM CO., LTD.

### (Blocked Isocyanate)

The blocked isocyanate is an isocyanate in which isocyanate groups are protected with blocking agents. The blocking agent inhibits the reaction of the isocyanate groups, and when the blocking agent is dissociated by a heat treatment, the isocyanate groups are regenerated, and the regenerated isocyanate groups can undergo a crosslinking reaction with an active hydrogen-containing group (e.g., a hydroxy group).

As the blocked isocyanate, mention may be made of blocked isocyanate of a polyisocyanate such as diisocyanate, or triisocyanate. As the types of isocyanate, mention may be made of an adduct type, a biuret type, and an isocyanurate type, and the biuret type and the isocyanurate type are preferred. A blocking agent which can be dissociated at a temperature at which the deformation, alteration, or the like of the substrate is less likely to be caused, is preferred. From this point, diethylaromaate (DEM), dimethylpyrazole (DMP), and the like can be mentioned as the blocking agent. A plurality of isocyanate groups included in the isocyanate may be protected by different blocking agents. For example, blocked isocyanate containing DEM and DMP can also be used as a blocking agent.

### (Preparation of Primer Layer Forming Polymer Composition)

In the primer layer forming polymer composition, the content rate of the blocked isocyanate for every 100 mass% of the total amount of the polymer and the blocked isocyanate can be, for example, 30.0 mass% or more and 60.0 mass% or less.

The content rate of the polymer for every 100 mass% of the total amount of the polymer and the blocked isocyanate can be, for example, 30.0 mass% or more, 40.0 mass% or more, or 50.0 mass% or more. In addition, the content rate of the polymer can be 90.0 mass% or less, 80.0 mass% or less, 70.0 mass% or less or 60.0 mass% or less.

The primer layer forming polymer composition can include one, or can include two or more of the above polymers, and one, or two or more blocked isocyanates. In the present invention and in the present description, when two or more certain components are included, the content rate of the components is intended to mean the total content rate of the two or more components.

The primer layer forming polymer composition can include one, or two or more of known polymerization initiators that can function as polymerization initiators for the (meth)acryloyl group possessed by the polymer. The primer layer forming polymer composition can include the polymerization initiator in a content rate, for example, within the range of 0.01 to 3.0 mass% when the total amount of the solid content is set to 100 mass%. In the present invention and the present description, the "total amount of the solid content" refers to the total amount of all the components except for the solvent for a certain composition.

The polymerization initiator is preferably a radical polymerization initiator. Further, as the polymerization initiator, a photopolymerization initiator or a thermal polymerization initiator can be used, and from the viewpoint of causing the polymerization reaction to proceed in a short time, a photopolymerization initiator is preferred. Examples of the photoradical polymerization initiators may include benzoin ketal such as 2,2-dimethoxy-1,2-diphenylethan-1-one; α-hydroxyketone such as 1-hydroxycyclohexylphenyl ketone, 2-hydroxy-2-methyl-1-phenylpropan-1-one, or 1-[4-(2-hydroxyethoxy)phenyl]-2-hydroxy-2-methyl-1-propan-1-one; α-aminoketone such as 2-benzyl-2-dimethylamino-1-(4-morpholinephenyl)-butane-1-one, or 1,2-methyl-1-[4-(methylthio)phenyl]-2-morpholinopropane-1-one; oxime esters such as 1-[(4-phenylthio)phenyl]-1,2-octadione-2-(benzoyl)oxime; phosphine oxide such as bis(2,4,6-trimethylbenzoyl)phenylphosphine oxide, bis(2,6-dimethoxybenzoyl)-2,4,4-trimethylpentylphosphine oxide, or 2,4,6-trimethylbenzoyl diphenylphosphine oxide; 2,4,5-triarylimidazole dimer such as 2-(o-chlorophenyl)-4,5-diphenylimidazole dimer, 2-(o-chlorophenyl)-4,5-di(methoxyphenyl)imidazole dimer, 2-(o-fluorophenyl)-4,5-diphenylimidazole dimer, 2-(o-methoxyphenyl)-4,5-diphenylimidazole dimer, or 2-(p-methoxyphenyl)-4,5-diphenylimidazole dimer; benzophenone compounds such as benzophenone, N,N'-tetramethyl-4,4'-diaminobenzophenone, N,N'-tetraethyl-4,4'-diaminobenzophenone, or 4-methoxy-4'-dimethylaminobenzophenone; quinone compounds such as 2-ethylanthraquinone, phenantrequinone, 2-tert-butylanthraquinone, octamethylanthraquinone, 1,2-benzanthraquinone, 2,3-benzanthraquinone, 2-phenylanthraquinone, 2,3-diphenylanthraquinone, 1-chloroanthraquinone, 2-methylanthraquinone, 1,4-naphthoquinone, 9,10-phenanthroquinone, 2-methyl-1,4-naphthoquinone, and 2,3-dimethylanthraquinone; benzoin ethers such as benzoin methyl ether, benzoin ethyl ether, and benzoin phenyl ether; benzoin compounds such as benzoin, methylbenzoin, and ethylbenzoin; benzyl compound such as benzyldimethyl ketal; acridine compounds such as 9-phenylacridine, and 1,7-bis (9 9'-acridinylheptane): N-phenylglycine, and coumarin. In addition, in the 2,4,5-triarylimidazole dimers, the substituents for the aryl groups in two triarylimidazole moieties may provide the same and symmetric compounds, or may provide different and asymmetric compounds. Further, a thioxanthone compound and a tertiary amine may be combined with each other like a combination of diethylthioxanthone and dimethylaminobenzoic acid. Among these, from the viewpoints of the curability, the transparency, and the heat resistance, α-hydroxyketone and phosphine oxide are preferable.

The primer layer forming polymer composition can include a catalyst that catalyzes a crosslinking reaction of isocyanate groups. The content rate of the catalyst can be, for example, within the range of 0.1 to 15.0 mass% when the total amount of the solid contents is set to 100 mass%. Examples of the catalyst may include dibutyltin dilaurate, dibutylthion octate, dimethylcyclohexylamine, dimethylbenzylamine, trioctylamines, and bis((2-morpholinoethyl)ether).

The primer layer forming polymer composition can include any solvent in any amount.

The primer layer forming polymer composition may further contain known additives that can be generally added to the composition for forming a primer layer in an arbitrary amount. Known compounds can be used as additives.

The primer layer forming polymer composition can be prepared by mixing the above-described various components at the same time or sequentially in arbitrary order.

The primer layer can be formed on the substrate by applying the primer layer forming polymer composition to the substrate and subjecting the applied composition to a drying treatment, and removing a part of or all of the solvent. It is essential only that the drying treatment is performed so as to allow removal of a part of or all of the solvent. For example, the drying treatment can be performed by air drying at room temperature, or the like. The "room temperature" described in the present description represents the temperature within the range of 20 to 25°C. In order to clean the surface of the substrate or the like, one or more known pretreatments such as an alkaline treatment and a UV ozone treatment can be arbitrarily performed on the surface of the substrate before application. Alternatively, another layer of the hard coat layer may be formed on the surface of the substrate to which the primer layer is applied. As an application method, a known application method such as a spin coating method or a dip coating method can be employed, and a spin coating method is preferable from the viewpoint of the uniformity of application.

The curing treatment for effecting the reaction of the (meth) acryloyl group possessed by the polymer contained in the primer layer and the heat treatment for dissociating the blocking agent of the blocked isocyanate will be described later.

The thickness of the primer layer can be, for example, 3 µm or more, and is preferably 4 µm or more. In addition, the thickness of the primer layer can be, for example, 15 µm or less, and is preferably 10 µm or less.

### <Photochromic Layer>

### <<Polymerizable Compound>>

The photochromic article has a photochromic layer containing a photochromic compound on the primer layer. The photochromic layer can be a cured layer obtained by curing a photochromic layer forming polymerizable composition. The photochromic layer forming polymerizable composition can be, for example, a (meth)acrylate based polymerizable composition. In the present invention and the present description, the "(meth)acrylate based polymerizable composition" is assumed to refer to a polymerizable composition including (meth)acrylate. The "(meth)acrylate" is used as a meaning encompassing an acrylate and a methacrylate. The "acrylate" is a compound having one or more acryloyl groups in one molecule. The "methacrylate" is a compound having one or more methacryloyl groups in one molecule. The functional number is the number of groups selected from the group consisting of acryloyl groups and methacryloyl groups contained in one molecule for the (meth)acrylate. In the present invention and the present description, the "methacrylate" is assumed to refer to a compound containing only a methacryloyl group as the (meth)acryloyl group, and a compound that contains both an acryloyl group and a methacryloyl group as the (meth)acryloyl groups is referred to as an acrylate. Further, unless otherwise specified, the described groups may have a substituent, or may be unsubstituted. When a certain group has a substituent, as the substituent, mention may be made of alkyl groups (for example, an alkyl group having 1 to 6 carbon atoms), hydroxyl groups, alkoxy groups (for example, an alkoxy group having 1 to 6 carbon atoms), halogen atoms (for example, a fluorine atom, a chlorine atom, and a bromine atom), cyano groups, amino groups, nitro groups, acyl groups, carboxy groups, aryl groups, polyether groups, and the like. In addition, for a group having a substituent, the "number of carbon atoms" means the number of carbon atoms in a moiety containing no substituents.

Hereinafter, the (meth)acrylate based polymerizable composition, which is one form of a polymerizable composition for forming the photochromic layer will be described. However, the following form is merely an example, and the present invention is not limited only to such an example.

The polymerizable composition for forming the photochromic layer can be a (meth)acrylate based polymerizable composition containing one or more polymerizable compounds selected from the group consisting of the following component A, the following component B, and the following component C in one form.

### (Component A)

The component A is a multifunctional (meth)acrylate containing a polyalkylene glycol moiety and having a molecular weight of 500 or more. In the present invention and the present description, the "polyalkylene glycol moiety" refers to a partial structure represented by the following Formula 2:
[C1]

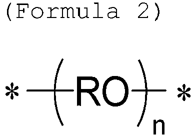

In Formula 2, R represents an alkylene group, and n represents the number of repetitions of an alkoxy group represented by RO and is 2 or more. * indicates a bonding position at which the partial structure represented by Formula 2 is bonded to an adjacent atom. The number of carbon atoms in the alkylene group represented by R can be one or more or two or more, and can be, for example, five or less or four or less. Specific examples of the alkylene group represented by R may include an ethylene group, a propylene group, and a tetramethylene group. n is 2 or more, and can be, for example, 30 or less, 25 or less or 20 or less. In one form, the component A can have the above-described partial structure in which R represents an ethylene group, that is, a polyethylene glycol moiety. In addition, in one form, the component A can have the above-described partial structure in which R represents a propylene group, that is, a polypropylene glycol moiety.

The molecular weight of the component A is 500 or more. In the present invention and the present description, as the molecular weight of a multimer, a theoretical molecular weight calculated from the structural formula determined by structural analysis of a compound or the ratio between raw materials prepared during production is employed. The molecular weight of the component A is 500 or more, preferably 510 or more, more preferably 520 or more, preferably 550 or more, more preferably 570 or more, still more preferably 600 or more, still furthermore preferably 630 or more, and far still more preferably 650 or more. The molecular weight of the component A is preferably, for example, 2000 or less, 1500 or less, 1200 or less, 1000 or less, or 800 or less from the viewpoint of increasing the hardness of the photochromic layer.

The component A can be a multifunctional (meth)acrylate, for example, a difunctional, trifunctional, tetrafunctional, or pentafunctional (meth)acrylate, and is preferably a difunctional or trifunctional (meth)acrylate. The component A may contain, as a (meth)acryloyl group, only an acryloyl group, may include only a methacryloyl group, or may include an acryloyl group and a methacryloyl group. That is, the component A can be an acrylate or a methacrylate.

In one form, the component A can be acyclic multifunctional (meth)acryltae. In the present invention and the present description, the "acyclic" means that no cyclic structures are included. In contrast, the "cyclic" means that a cyclic structure is included. The acyclic multifunctional (meth)acrylate refers to a di- or higher functional (meth)acrylate including no cyclic structures. Specific examples of such a component A may include polyalkylene glycol di(meth)acrylate represented by the following Formula 3.
[C2]

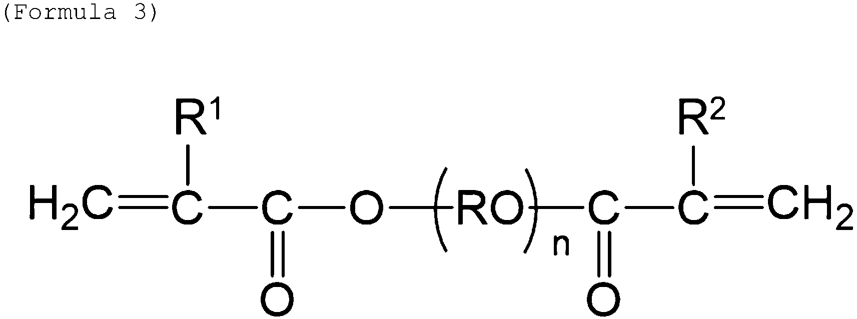

In Formula 3, R¹ and R² each independently represent a hydrogen atom or a methyl group, R represents an alkylene group, and n represents the number of repetitions of an alkoxy group represented by RO and is 2 or more. R and n are as described previously regarding the partial structure represented by Formula 2. The polyalkylene glycol di(meth)acrylate represented by Formula 3 may include, as a (meth)acryloyl group, only an acryloyl group, may include only a methacryloyl group, or may include an acryloyl group and a methacryloyl group. Specific examples of the polyalkylene glycol di(meth)acrylate represented by Formula 3 may include polyethylene glycol di(meth)acrylate, polypropylene glycol di(meth)acrylate, and polytetramethylene glycol di(meth)acrylate.

In addition, specific examples of the component A may include tri(meth)acrylate represented by the following Formula 4. The tri(meth)acrylate represented by Formula 4 may contain, as a (meth)acryloyl group, only an acryloyl group, may contain only a methacryloyl group, or may contain an acryloyl group and a methacryloyl group.
[C3]

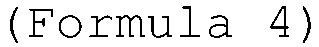

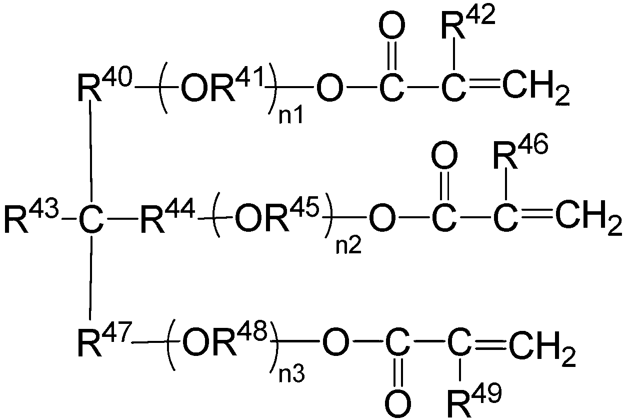

In Formula 4, R⁴⁰, R⁴¹, R⁴⁴, R⁴⁵, R⁴⁷, and R⁴⁸ each independently represent an alkylene group, R⁴³ represents an alkyl group, and R⁴², R⁴⁶, and R⁴⁹ each independently represent a hydrogen atom or a methyl group. n1 represents the number of repetitions of an alkoxy group represented by OR⁴¹ and is 2 or more. n2 represents the number of repetitions of an alkoxy group represented by OR⁴⁵, and is 2 or more. n3 represents the number of repetitions of an alkoxy group represented by OR⁴⁸ and is 2 or more.

Hereinafter, Formula 4 will be described in more detail.

R⁴¹, R⁴⁵, and R⁴⁸ in Formula 4 are as described previously regarding R in Formula 2. n1, n2, and n3 in Formula 4 are as described previously regarding n in Formula 2. In Formula 4, R⁴¹, R⁴⁵, and R⁴⁸ may be the same as one another, or two or three thereof may be different from one another. This also applies to n1, n2, and n3.

R⁴², R⁴⁶, and R⁴⁹ each independently represent a hydrogen atom or a methyl group. The tri(meth)acrylate represented by Formula 4 may contain, as a (meth)acryloyl group, only an acryloyl group, may contain only a methacryloyl group, or may contain an acryloyl group and a methacryloyl group.

The number of carbon atoms in the alkyl group represented by R⁴³ can be 1 or more or 2 or more, and can be, for example, 5 or less or 4 or less. The alkyl group represented by R⁴³ can be a linear alkyl group or a branched alkyl group. Specific examples of the alkyl group represented by R⁴³ include a methyl group, and an ethyl group.

R⁴⁰, R⁴⁴, and R⁴⁷ each independently represent an alkylene group. The number of carbon atoms in such an alkylene group can be 1 or more or 2 or more, and can be, for example, 5 or less or 4 or less. Specific examples thereof may include an ethylene group, a propylene group, and a tetramethylene group.

Specific examples of the tri(meth)acrylate represented by Formula 4 may include trimethylolpropane polyoxyethylene ether tri(meth)acrylate.

### Monofunctional (Meth)acrylate

From the viewpoint of increasing the (meth)acryloyl group content of the polymerizable composition containing a (meth)acrylate, a (meth)acrylate having a high proportion of the (meth)acryloyl group in the molecule is preferable. From this point, a monofunctional (meth)acrylate having a low molecular weight is preferable, and a monofunctional (meth)acrylate having a molecular weight of 150 or less is more preferable. The monofunctional (meth)acrylate having a molecular weight of 150 or less may be a cyclic monofunctional (meth)acrylate or an acyclic monofunctional (meth)acrylate. Specific examples of the cyclic monofunctional (meth)acrylate having a molecular weight of 150 or less may include glycidyl(meth)acrylate. Specific examples of the acyclic monofunctional (meth)acrylate having a molecular weight of 150 or less may include n-butyl(meth)acrylate. The molecular weight of the monofunctional (meth)acrylate having a molecular weight of 150 or less can be, for example, 100 or more, but is not limited thereto.

### Multifunctional (Meth)acrylate

As described previously, from the viewpoint of increasing the (meth)acryloyl group content of the polymerizable composition containing a (meth)acrylate, a (meth)acrylate having a high proportion of the (meth)acryloyl group in the molecule is preferable. From this point, a multifunctional (meth)acrylate having a smaller molecular weight than that of the component A is also preferable. As such a multifunctional (meth)acrylate, a multifunctional (meth)acrylate having a higher functional number than that of the multifunctional (meth)acrylate used as the component A is also preferable. The molecular weight of such a multifunctional (meth)acrylate is preferably less than 500, 400 or less, 300 or less, or 200 or less. The molecular weight can be, for example, 100 or more, but is not limited thereto. In addition, such a multifunctional (meth)acrylate can be, for example, a deca- or higher (for example, deca- or higher and pentadeca- or lower) multifunctional (meth)acrylate. Specific examples thereof may include poly[(3-methacryloyloxypropyl)silsesquioxane] derivatives to be described in the section of Example to be described below.

As the (meth)acrylates that can be contained in the (meth)acrylate based polymerizable composition, which is the polymerizable composition for forming the photochromic layer, mention may be made of a monofunctional (meth)acrylate represented by the following Formula 1 (hereinafter, also referred to as "component B"), and a difunctional (meth)acrylate represented by the following Formula 5 (hereinafter, also referred to as "component C"). In one form, the (meth)acrylat based polymerizable composition can be a polymerizable composition containing one or more (meth)acrylates selected from the group consisting of a monofunctional (meth)acrylate represented by the following Formula 1 and a difunctional (meth)acrylate represented by the following Formula 5. In another form, the (meth)acrylate based polymerizable composition can be a polymerizable composition that does not contain one or more (meth)acrylates selected from the group consisting of the monofunctional (meth)acrylate represented by the following Formula 1 and the difunctional (meth)acrylate represented by the following Formula 5. In one form, the (meth)acrylate based polymerizable composition can also contain the component B as the monofunctional (meth)acrylate having a molecular weight of 150 or less.

### (Component B)

The component B is the monofunctional (meth)acrylate represented by the following Formula 1.
[C4]

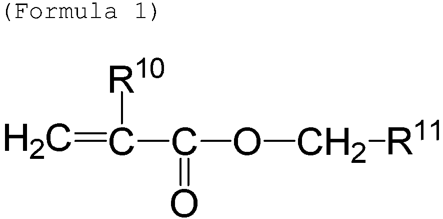

Hereinafter, Formula 1 will be described in more detail.

In Formula 1, R¹⁰ represents a hydrogen atom or a methyl group. The monofunctional (meth)acrylate represented by Formula 1 may be an acrylate or may be a methacrylate.

R¹¹ represents a linear alkyl group having 3 or more carbon atoms or a branched alkyl group having 3 or more carbon atoms. These alkyl groups may be unsubstituted or may have a substituent. The substituent has no particular restriction, and for example, the various substituents described previously may be exemplified. The number of carbon atoms in the linear or branched alkyl group represented by R¹¹ is 3 or more, preferably 4 or more, more preferably 5 or more, and still more preferably 6 or more, 7 or more, 8 or more, 9 or more, 10 or more, and 11 or more in this order. On the other hand, from the viewpoint of the solubility of a photochromic compound in the composition, the number of carbon atoms is preferably 15 or less, more preferably 14 or less, and still more preferably 13 or less and 12 or less in order.

The molecular weight of the monofunctional (meth)acrylate represented by Formula 1 can be, for example, 100 or more, or can be, for example, 300 or less. However, the molecular weight is not limited to the above-described range. As described previously, in one aspect, the monofunctional (meth)acrylate represented by Formula 1 can be a monofunctional (meth)acrylate having a molecular weight of 150 or less. Specific examples of the monofunctional (meth)acrylate represented by Formula 1 may include n-butyl(meth)acrylate, 2-ethylhexyl(meth)acrylate, isodecyl(meth)acrylate, and n-lauryl(meth)acrylate.

### (Component C)

The component C is a (meth)acrylate represented by the following Formula 5.
[C5]

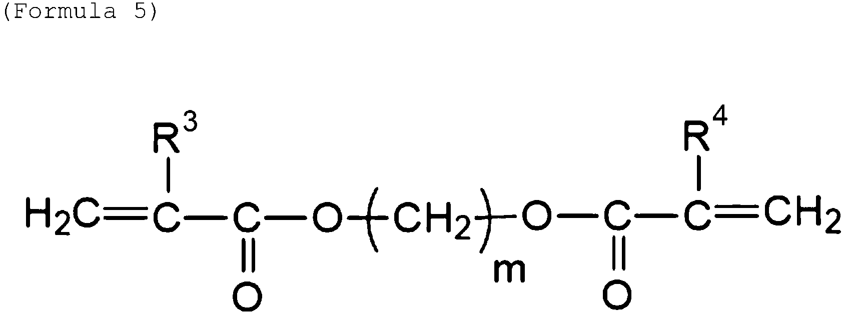

In Formula 5, R³ and R⁴ each independently represent a hydrogen atom or a methyl group, and m represents an integer of 1 or more. m is 1 or more, and can be, for example, 10 or less, 9 or less, 8 or less, 7 or less, or 6 or less.

The molecular weight of the component C can be, for example, 400 or less, and from the viewpoint of more increasing the coloring density of the photochromic layer, the molecular weight is preferably 350 or less, more preferably 300 or less, and further preferably 250 or less. In addition, the molecular weight of the component C can be, for example, 100 or more, 150 or more, or 200 or more.

The component C may include only an acryloyl group, may include only a methacryloyl group, and may include an acryloyl group and a methacryloyl group as a (meth)acryloyl group. Specific examples of the component C may include 1,9-nonanediol di(meth)acrylate, 1,6-hexanediol di(meth)acrylate, and 1,10-decanediol di(meth)acrylate.

In the (meth)acrylate based polymerizable composition, the content rate of the component A is preferably 50 mass% or more, more preferably 55 mass% or more, and further more preferably 60 mass% or more when the total amount of the polymerizable compounds included in the composition is set to 100 mass%. In one aspect, the component A can be a component that accounts for the largest fraction among the plurality of polymerizable compounds contained in the composition. In addition, the content rate of the component A can be 90 mass% or less, 85 mass% or less, or 80 mass% or less when the total amount of the polymerizable compounds included in the composition is set to 100 mass%. The composition can contain only one type of the component A in one form, and can contain two or more types thereof in another form. In a case where two or more types of the components A are contained, the content rate of the component A is the total content rate of the two or more types thereof. This also applies to the content rates of other components in the present invention and the present description.

The (meth)acrylate based polymerizable composition can contain the various (meth)acrylates described above in, for example, an amount such that the (meth)acryloyl group content of the composition may become 3.50 mmol/g or more. For example, the (meth)acrylate based polymerizable composition preferably contains a monofunctional (meth)acrylate having a molecular weight of 150 or less in an amount of 5 mass% or more, more preferably contains the monofunctional (meth)acrylate in an amount of 10 mass% or more, and still more preferably in an amount of 15 mass% or more when the total amount of the polymerizable composition included in the composition is set to 100 mass%. Further, the content rate of the monofunctional (meth)acrylate having a molecular weight of 150 or less is preferably 30 mass% or less and more preferably 25 mass% or less when the total amount of the polymerizable compounds in the composition is set to 100 mass%.

From the viewpoint of improving the weather resistance of the photolayer, the (meth)acryloyl group content of the (meth)acrylate based polymerizable composition is preferably 3.50 mmol/g or more, more preferably 3.55 mmol/g or more, furthermore preferably 3.60 mmol/g or more, still furthermore preferably 3.65 mmol/g or more, even far still more preferably 3.70 mmol/g or more, and even farther more preferably 3.75 mmol/g or more. The (meth)acryloyl group content of the (meth)acrylate based polymerizable composition can be, for example, 5.00 mmol/g or less, 4.50 mmol/g or less, or 4.00 mmol/g or less, or may exceed the values exemplified here.

The "(meth)acryloyl group content" of the polymerizable composition containing a (meth)acrylate is calculated in the following manner.

The total amount of the (meth)acrylates contained in the polymerizable composition is set to "1" in terms of mass, and the content rate of each of the (meth)acrylates is calculated.

For each of the (meth)acrylates, the "(meth)acryloyl group content × the content rate described above" is determined. The total of the values thus calculated for all of the (meth)acrylates contained in the polymerizable composition is regarded as the (meth)acryloyl group content of the polymerizable composition.

As an example, the photochromic compound that is contained in the photochromic layer is irradiated with light such as sunlight, and undergoes a structural change through an excited state. The structure after the structural change through light irradiation can be referred to as a "colored body." In contrast, the structure before light irradiation can be referred to as a "colorless body." Incidentally, regarding the colorless body, "being colorless" is not limited to being completely colorless, and encompasses a case where the color is light as compared with that of the colored body. After the colored body has undergone a structural change due to light irradiation and has been colored, the fading rate becomes faster as the rate of the structural change from the colored body to a colorless body becomes faster. It is considered that, in the photochromic layer, the easier the molecular motion of the photochromic compound becomes in the matrix formed by the polymerization reaction of the polymerizable compound, the faster the rate of the structural change becomes. From the viewpoint of increasing such a rate, it is considered that a flexible matrix is desirable. Regarding the points up to this point, the component A is presumed to be capable of contributing to making the matrix flexible. Particularly, it is considered that a flexible matrix can be formed by the component A because the molecular weight of the component A is 500 or more and the component A has the polyalkylene glycol moiety.

In addition, it is considered that the (meth)acryloyl group content in the (meth)acrylate based polymerizable composition being 3.50 mmol/g or more contributes to the formation of a rigid polymer network between molecules in the matrix formed of such a composition. It is presumed that the (meth)acrylate based polymerizable composition makes it possible to form a photochromic layer having excellent weather resistance because in the matrix having a rigid polymer network, the diffusion of active species capable of causing the degradation of the weather resistance can be suppressed.

The content rate of the polymerizable compound (in a case where a plurality of polymerizable compounds are contained, the total content rate thereof) in the (meth)acrylate based polymerizable composition can be, for example, 80 mass% or more, 85 mass% or more, or 90 mass% or more when the total amount of the composition is set to 100 mass%. In addition, the content rate of the polymerizable compound in the (meth)acrylate based polymerizable composition can be, for example, 99 mass% or less, 95 mass% or less, 90 mass% or less, or 85 mass% or less when the total amount of the composition is set to 100 mass%. The (meth)acrylate based polymerizable composition may contain or may not contain a solvent. In a case where the composition contains a solvent, any solvent can be used in an arbitrary amount so long as it does not hinder the progress of the polymerization reaction of the polymerizable compound.

### <<Photochromic Compound>>

The composition includes a photochromic compound together with the polymerizable compound. As the photochromic compounds included in the composition, known compounds exhibiting the photochromic properties can be used. The photochromic compound can exhibit the photochromic properties to, for example, ultraviolet rays. Examples of the photochromic compounds may include compounds having known skeletons that exhibit photochromic properties, such as azobenzenes, spiropyrans, spirooxazines, naphthopyrans, indenonaphthopyrans, phenanthropyrans, hexaallylbisimidazoles, donor-acceptor Stenhouse adducts (DASA), salicylidene anilines, dihydropyrenes, anthracene dimers, fulgides, diarylethenes, phenoxynaphthacenequinones, and stilbenes. Preferable examples of the photochromic compounds may include fulgimide compounds, spirooxazine compounds, chromene compounds, and indeno-fused naphthopyran compounds. In addition, as photochromic compounds, mention may also be made of one or more selected from the group consisting of photochromic compounds represented by General Formula A, photochromic compounds represented by General Formula B and photochromic compounds represented by General Formula C, which are described in WO 2022/138966. The photochromic compounds can be used singly alone, or can be used in mixture of two or more thereof. Although the content rate of the photochromic compound in the composition can be set at, for example, approximately 0.1 to 15 mass% when the total amount of the composition is set to 100 mass%, the content rate is not limited to this range.

### <<Other Components>>

The polymerizable composition for forming the photochromic layer may contain, in addition to the polymerizable compounds and the photochromic compound, one or more of various additives that can be normally contained in polymerizable compositions in any content rate. Examples of the additive that can be contained in the polymerizable composition for forming the photochromic layer may include a polymerization initiator for causing the polymerization reaction to progress. Regarding the polymerization initiator, the above description can be referred to. The content rate of the polymerization initiator can be, for example, within a range of 0.1 to 5.0 mass% when the total amount of the composition is set to 100 mass%.

To the polymerizable composition for forming the photochromic layer, known additives that can be normally added to compositions containing a photochromic compound, for example, a surfactant, an antioxidant, a radical scavenger, a light stabilizer, an ultraviolet absorber, an anti-coloring agent, an antistatic agent, a fluorescent dye, a dye, a pigment, a perfume, a plasticizer, and a silane coupling agent can be further added in any amount. As these additives, known compounds can be used.

The polymerizable composition for forming the photochromic layer can be prepared by mixing the above-described various components at the same time or sequentially in an arbitrary order.

The photochromic layer can be formed by applying the polymerizable composition for forming the photochromic layer onto the primer layer and performing a curing treatment on the applied composition. Regarding an application method, the above description can be referred to. The curing treatment can be light irradiation and/or a heating treatment, and light irradiation is preferable from the viewpoint of allowing the curing reaction to progress within a short period of time. The curing treatment conditions may be determined depending on the types of the various components that are contained in the polymerizable composition for forming the photochromic layer (the polymerizable compounds, the polymerization initiator, and the like described above), and the component composition of the composition. The thickness of the photochromic layer thus formed is preferably, for example, within the range of 5 to 80 µm, and more preferably within the range of 20 to 60 µm. The curing treatment herein performed can allow the reaction of the (meth)acryloyl group of the polymer contained in the primer layer to proceed. This presumably can form a bond between the photochromic layer and the primer layer.

The photochromic article having the photochromic layer may further have or may not further have one or more functional layers in addition to the above-described various layers. As the functional layers, mention may be made of layers known as functional layers for optical articles such as a protective layer, a hard coat layer, an antireflection layer, a water-repellent or hydrophilic anti-fouling layer, and an anti-fogging layer, which are for durability improvement. For example, regarding the protective layer, descriptions of paragraphs 0009 to 0021 and 0026 of Japanese Patent Application Publication No. 2021-107909, examples of the same publication, and the like can be referred to.

### <Heat Treatment>

A laminate in which a primer layer and a photochromic layer are formed on a substrate can be subjected to a heat treatment before the formation of, or after the formation of the functional layer. By the heat treatment conducted here, the blocking agent of the blocked isocyanate can be dissociated to regenerate the isocyanate groups. It is presumed that the regenerated isocyanate can contribute to the formation of bonds between the substrate and the primer layer with the hydroxy groups of the polymer. The heat treatment may be performed at a temperature equal to or higher than the dissociation temperature of the blocking agent contained in the blocked isocyanate.

The photochromic article can be an optical article. One form of the optical article is a spectacle lens. In addition, as one form of the optical article, mention may be made of a goggles lens, a visor (peak) part of a sun visor, a shield component of a helmet, and the like. The polymerizable composition for forming the photochromic layer is applied onto a substrate for these optical articles through a primer layer and a curing treatment is performed on the applied composition. As a result, a photochromic layer is formed, which can provide an optical article having an anti-glare function.

### [Spectacles]

One aspect of the present invention relates to spectacles including spectacle lenses, which are one form of the photochromic article. The details of the spectacle lens that is included in these spectacles are as described previously. The spectacles include such spectacle lenses, and are thereby capable of exhibiting an anti-glare effect, like sunglasses, for example, due to coloring of the photochromic compound contained in the photochromic layer coloring when irradiated with sunlight outdoors, and capable of restoring transmitting properties due to the photochromic compound fading upon moving back indoors. For the spectacles, a known technology can be applied to the configuration of the frame or the like.

### [Method for Producing Photochromic Article]

One aspect of the present invention relates to a method for producing a photochromic article, the method including:
applying a primer layer forming polymer composition onto a substrate, thereby forming a primer layer; and
forming a photochromic layer including a photochromic compound onto the formed primer layer, in which
the primer layer forming polymer composition contains
a polymer having a hydroxy group and a (meth)acryloyl group; and
a blocked isocyanate, and
the method further including heat-treating the laminate obtained by forming the photochromic layer.

According to the above-described production method, it is possible to produce a photochromic article having an excellent adhesive property between the substrate and the photochromic layer. Regarding the details of the production method, the above description can be referred to.

### Examples

Hereinafter, the present invention will be described in more detail by way of Examples. However, the present invention is not limited to embodiments shown in Examples.

### <Substrate>

Various substrates to be described below are plastic lens substrates to be described below. In all of the substrates, the object-side surface is a convex surface, and the eyeball-side surface is a concave surface. A substrate 4 (refractive index: 1.59) was a substrate having hard coat layers attached to both surfaces, and the application of a polymerizable composition for forming a primer layer to be described below was performed on the surfaces of the hard coat layers.
Substrate 1: Refractive index 1.50 (diethylene glycol bis(allyl carbonate) resins (CR-39))
Substrate 2: Refractive index 1.53 (urea resin)
Substrate 3: Refractive index 1.55 (diallyl phthalate resin)
Substrate 4: Refractive index 1.59 (polycarbonate resin)
Substrate 5: Refractive index 1.60 (urethane resin)
Substrate 6: Refractive index 1.67 (thiourethane resin)

### [Examples 1 to 6]

### <Production of Spectacle Lens (Photochromic Article)>

A plastic lens substrate was immersed in a 10 mass% sodium hydroxide aqueous solution (a liquid temperature of 60°C) for 5 minutes, and then was washed with pure water and dried. Subsequently, a primer layer was formed on the convex surface (object side surface) of the plastic lens substrate.

Particularly, the mixture obtained by mixing the various components shown in Table 1 was sufficiently stirred, and then defoamed in a rotation revolution stirring deaerator. The primer layer forming polymer composition thus obtained was stored under room temperature environment for 1 week, and then was applied to the convex surface of the plastic lens substrate shown in Table 3 by a spin coating method under environment of a temperature of 25°C and a relative humidity of 50%, followed by air-drying under the same environment for 5 minutes, thereby forming a primer layer. The thickness of the formed primer layer was 4 µm. The viscosity of the primer layer forming polymer composition after one week storage was the same as the viscosity before storage.

Onto the primer layer, the polymerizable composition for forming a photochromic layer ((meth)acryloyl group content: 3.61 mmol/g) prepared as described below was applied by the spin coating method. Spin coating was performed by the method described in Japanese Patent Application Publication No. 2005-218994. After that, the polymerizable composition for forming a photochromic layer applied onto the primer layer was irradiated with ultraviolet rays (wavelength of 405 nm) in a nitrogen atmosphere (oxygen concentration of 500 ppm or lower), and this composition was cured, thereby forming a photochromic layer. The thickness of the formed photochromic layer was 40 µm.

On the photochromic layer thus formed, a protective layer was formed by the method described in Example 1 of Japanese Patent Application Publication No. 2021-107909. The thickness of the formed protective layer was 15 µm.

Thereafter, the laminate having the primer layer, the photochromic layer, and the protective layer formed in this order on the substrate was heat-treated in a heating furnace at an ambient temperature of 90°C for 2 hours.

In this manner, a spectacle lens having a substrate, a primer layer, a photochromic layer, and a protective layer in this order therein was produced.

**[Table 1]**

| Component | Trade name | Content (g) |
|---|---|---|
| Polymers | Reactive acrylic polymers RP-274S manufactured by KSM Co., Ltd. | 3 |
| Blocked isocyanate | MF-K60B manufactured by Asahi Kasei Corp. | 3 |
| Solvent | PGMEA(propylene glycol monomethyl ether acetate) manufactured by Tokyo Chemical Industries Co., Ltd. | 5 |
| Catalyst | U-CAT660M manufactured by San-Apro Ltd. | 0.25 |
| Catalyst | Dibutyltin dilaurate manufactured by Tokyo Chemical Industries Co., Ltd. | 0.01 |
| Photopolymerization initiator | Omnirad 819, manufactured by IGA Resin B.V. | 0.0135 |
| Levelling agent | LE-605, manufactured by KYOEISHA Chemical Co., Ltd. | 0.05 |

### (Preparation of Polymerizable Composition for Forming Photochromic Layer)

In a plastic container, the components shown in Table 2 were mixed in the respective amounts shown in Table 2.

The following photochromic compound (indeno-fused naphthopyran compounds represented by the structural formula shown in U.S. Patent Specification No. 6296785), a photoradical polymerization initiator (bis(2,4,6-trimethylbenzoyl)phenylphosphine oxide (Omnirad 819 manufactured by IGM Resin B.V.)), an antioxidant (bis[3-(3-tert-butyl-4-hydroxy-5-methylphenyl)propionate] [ethylenebis(oxyethylene)]), and a light stabilizer (bis(1,2,2,6,6-pentamethyl-4-piperidyl) sebacate) were mixed with the mixture of the polymerizable compounds thus obtained with sufficient stirring. After that, defoaming was performed with a rotation revolution stirring deaerator. Thus, a polymerizable composition for forming a photochromic layer was prepared. The content rates of the components when the total amount of the composition was set to 100 mass% were 94.9 mass% for the mixture of the polymerizable compounds, 3 mass% for the photochromic compound, 0.3 mass% for the photoradical polymerization initiator, 0.9 mass% for the antioxidant, and 0.9 mass% for the light stabilizer.

**[Table 2]**

| | Molecular weight | (Meth)acryloyl group content [mmol/g] | Content [parts by mass] |
|---|---|---|---|
| Trimethylolpropane polyoxyethylene ether trimethacrylate | 1264 | 2.4 | 56 |
| n-butyl methacrylate | 142 | 7.0 | 20 |
| Polypropylene glycol dimethacrylate | 561 | 3.6 | 24 |

[C6]

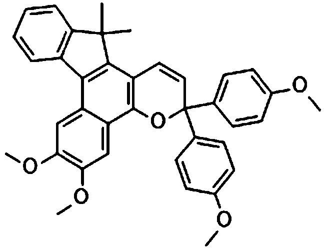

### [Comparative Example 1]

A primer layer forming polymer composition was prepared by the method described for Example 1, except that a biuret-type triisocyanate in which isocyanate groups were not protected with a blocking agent was used in place of the blocked isocyanate. When the prepared primer layer forming polymer composition was stored under room temperature environment for one week, the viscosity was significantly increased as compared with before storage and could not be used for application by a spin coating method.

### [Evaluation of Adhesive Property]

Three spectacle lenses were made for Examples 1 to 6, respectively. For each of the produced spectacle lenses, the adhesive property was evaluated by a cross-cut method according to JIS K 5600-5-6:1999. Table 3 shows the number of remaining squares relative to the total number of squares of 100. When the number of remaining squares is 99 or more, it can be found that the adhesive property is excellent. From the results shown in Table 3, it is possible to confirm that each spectacle lens of Examples 1 to 6 has an excellent adhesive property between the substrate and the photochromic layer.

**[Table 3]**

| Example No. | Substrate | Number of remaining squares |
|---|---|---|
| Example 1 | Substrate 1 | 100/99/99 |
| Example 2 | Substrate 2 | 100/100/100 |
| Example 3 | Substrate 3 | 100/100/100 |
| Example 4 | Substrate 4 | 99/99/99 |
| Example 5 | Substrate 5 | 100/100/100 |
| Example 6 | Substrate 6 | 100/100/100 |

Two or more of the various aspects and the various forms described in the present description can be combined together in an arbitrary combination.

The embodiments disclosed herein are only examples in all respects and should not be considered as restrictive. The scope of the present invention is defined not by the above description, but by the appended claims, and is intended to encompass the meanings equivalent to the appended claims and all changes within the scope.

### Industrial Applicability

The present invention is useful in the technical fields of spectacles, goggles, sun visors, helmets, and the like.

## Claims

1. A photochromic article, comprising:
a substrate;
a primer layer formed from a primer layer forming polymer composition; and
a photochromic layer containing a photochromic compound
in this order, wherein
the primer layer forming polymer composition includes
a polymer having a hydroxy group and a (meth)acryloyl group, and
a blocked isocyanate.

2. The photochromic article according to claim 1, wherein the polymer is a (meth) acrylic polymer.

3. The photochromic article according to claim 1, wherein the photochromic layer is a cured layer generated by curing a (meth)acrylate based polymerizable composition containing a photochromic compound.

4. The photochromic article according to claim 2, wherein the photochromic layer is a cured layer generated by curing a (meth)acrylate based polymerizable composition containing a photochromic compound.

5. The photochromic article according to any one of claims 1 to 4, comprising a spectacle lens, a goggle lens, a visor part of a sunvisor or a shield component of a helmet.

6. The photochromic article according to claim 5, comprising a spectacle lens.

7. Spectacles comprising the spectacle lens according to claim 6.

8. A method for producing a photochromic article, the method comprising:
applying a primer layer forming polymer composition onto a substrate, thereby forming a primer layer; and
forming a photochromic layer including a photochromic compound onto the formed primer layer, wherein
the primer layer forming polymer composition includes
a polymer having a hydroxy group and a (meth)acryloyl group; and
a blocked isocyanate, and
the method further comprising subjecting a laminate obtained by forming the photochromic layer to a heat treatment.

9. The method for producing the photochromic article according to claim 8, wherein the polymer is a (meth) acrylic polymer.

10. The method for producing the photochromic article according to claim 8, comprising forming the photochromic layer by curing a (meth)acrylate based polymerizable composition containing a photochromic compound.

11. The method for producing the photochromic article according to claim 9, comprising forming the photochromic layer by curing a (meth)acrylate based polymerizable composition containing a photochromic compound.

12. The method for producing the photochromic article according to any one of claims 8 to 11, wherein the photochromic article is a spectacle lens, a goggle lens, a visor part of a sunvisor, or a shield component of a helmet.
